# EUROPEAN PATENT APPLICATION

(11) **EP 2 138 839 A2**
(43) Date of publication of application: **30.12.2009**
(21) Application number: 09163037.6
(22) Date of filing: 18.06.2009
(51) Int. Cl.: G01N 30/60, B01D 15/22

(54) **Chromatographic module and chromatographic apparatus**

(30) Priority: 25.06.2008 US 133003
(71) Applicant: Millipore Corporation, Billerica, MA 01821 (US)
(72) Inventor: Natarajan, Venkatesh, Billerica MA 01821 (US)
(74) Representative: Henkel, Feiler & Hänzel

(57) **Abstract**

A chromatographic module (17), comprising a fluid inlet (14) to the module, a fluid outlet (11) from the module and a chromatographic packed bed (32) positioned within the module between the fluid inlet (14) and the fluid outlet (11). The packed bed (32) is retained within the module by a first fluid porous frit (38) located at the side of the fluid inlet (14) and a second porous frit (40) located at the side of the fluid outlet (11), and a portion of the fluid inlet (14) and a portion of the fluid outlet (11) are in fluid communication with the respective frits (38,40) and the packed bed (32). A chromatographic apparatus comprises at least one, preferably several, of these chromatographic module(s) (17).

## Description

### CROSS-REFERENCE TO RELATED APPLICATIONS

This application claims the benefit of U.S. provisional patent application No.: 61/131,640, filed on June 11, 2008, the entire contents of which are incorporated by reference herein.

### BACKGROUND OF THE INVENTION

This invention relates to a chromatographic module and a chromatographic apparatus and more particularly to a modular chromatography apparatus wherein a plurality of chromatography modules can be connected to each other to enable linear scaling of a chromatographic process in either a parallel or series flow formal

Process chromatography presently is utilized in many applications including biochemical, clinical, environmental, food and petroleum chemistry. In a chromatographic process, a mixture of components in a fluid is typically resolved in a chromatographic medium (heretofore referred to as the resin or media) having an active adsorptive function. The resolution could also be based on the hydro dynamical size of the components as in Size Exclusion Chromatography. The chromatographic apparatus wherein this separation occurs usually takes the form of a cylindrical column.

In chromatography, scalability from a relatively small capacity process to a relatively large capacity process while attaining essentially the same results is not straightforward. One of the reasons for the difficulty of scaling up the capacity of the chromatographic apparatus is that the wall effect does not scale linearly with column size. It is larger in small diameter columns (< 10-20 cm) as compared to large diameter columns. The wall-effect refers to the frictional forces at the walls of the column. These forces allow higher flow rates at a given pressure drop. However, these forces are relevant only in the immediate vicinity of the column wall. In the case of small columns (< 10 cm), the contribution of these forces is significant as the area in which they are relevant may be a significant proportion of the total cross-sectional area and help offset some of the hydraulic drag forces. As the column size increases, the relative contribution of these forces is lowered in a nonlinear fashion. In addition, the relative contribution of these forces is dependent on the type of media being packed. The wall effect affects the fluid flow near the wall, resulting in non-homogenous flow profile and, in addition, it provides additional mechanical support to the chromatographic resin allowing higher linear velocities for the same pressure drop.

A second problem is that as the column size increases, the effect of flow distributor design on the achievement of a homogeneous flow profile in the packed bed becomes more and more pronounced. This effect does not scale linearly with column size.

A third problem is that the bed depth in chromatography processes is typically maintained constant on scale-up. This is mainly due to the hydraulic limitations of the chromatography resin/media. Thus, on scale-up, the aspect ratio (column length/column diameter) diminishes. This also adversely impacts the linearity of scale-up.

A fourth problem is that the chromatographic load (volume or mass) cannot easily be matched with the corresponding required resin volume. Currently, chromatographic columns are offered at discrete sizes. Given the typical lead times for chromatographic columns (3-6 months), decisions on column sizes have to be made based on an estimate of the manufacturing capacity. This reduces the flexibility to increase or decrease the media volume as drug demand or plant schedule changes.

Finally, packing the chromatographic media in a column is labor intensive. This scales nonlinearly with scale. At manufacturing scale, the auxiliary equipment required to assist in column packing (media tank, slurry transfer system, column hydraulics, etc) present significant capital investment and manufacturing space footprint.

Accordingly, it would be desirable to provide a chromatographic module and apparatus which is easily and accurately scaleable. In addition, it would be desirable to provide such an apparatus having a wide range of available volumes of chromatographic media/resin. In addition, it would be desirable to provide such an apparatus wherein scaling up of the chromatographic apparatus, as desired, is not labor intensive. Such an apparatus would provide flexibility as to the chromatographic capacity as well as providing aecuraey of results when scaling up.

### SUMMARY OF THE INVENTION

The present invention provides a chromatographic module as defined in claim 1 and a chromatographic apparatus as defined in claim 8 which is formed from one or a plurality of such identical chromatographic modules which can be joined together to effect fluid flow into the modules, fluid flow through a chromatographic packed bed of particles within the modules and fluid flow out from the modules.

Preferred embodiments of the chromatographic module and of the chromatographic apparatus are defined in the dependent claims.

The modules comprise a housing having one or more fluid inlets and a fluid outlet and optionally, a vent. The inlet and outlet can be connected respectively to the inlet of one or more such modules and to the outlet of the one or more such modules so that the modules can operate in parallel or in series. Each module contains a chromatographic packed bed of particles of substantially the same volume.

Scalability is achieved by joining the number of modules desired to obtain the desired effective volume of chromatographic packed bed. Since the modules have identical size and shape, the wall effect within each module is the same as the wall effects within the remaining modules. This provides the advantage of rendering scalability linear. In addition, the use of these modules permits the use of a wide range of effective volumes of chromatographic media. This provides the advantage of providing optimum operation for a wide variety of chromatographic processes. In addition, the present invention enables disposable resin-based chromatographic operation. The chromatographic modules preferably are operated in parallel flow. Serial flow also can be effected.

### BRIEF DESCRIPTION OF THE DRAWINGS

Figure 1 is a perspective view of modules of this invention including means for connecting a plurality of modules.
Figure 2 is a cross-sectional view of a module of Figure 1.
Figure 3 is an exploded view of a plurality of modules of Figure 2 which are joined together.
Figures 4 A and B show a plurality of modules in cross-sectional view joined together in a series flow format.
Figures 5 A-C show different header configurations of the present invention in cross-sectional view.
Figure 6 is a cross-sectional view of a module of Figure 2.
Figure 7 represents the data of the Example.

### DESCRIPTION OF SPECIFIC EMBODIMENTS

The chromatographic apparatus provides flexibility in meeting the needs of a wide variety of chromatography processes in that the effective chromatographic bed volume can be easily tailored to a specific chromatographic process. All that one needs to do is to identify the number of chromatographic modules of this invention, whether they are to be used in series or parallel flow configurations and then connect them to provide the desired fluid flow through the beds in the modules and then recover the effluent or recover the desired component retained by the chromatographic beds in a manner well known in the art. Since the plurality of chromatographic modules have substantially the same configuration, the wall effects within the modules is substantially the same. Additionally, as they have substantially the same volume and are packed substantially identical to each other there is little, preferably no detectable performance difference between the modules. Thus, when one scales up the chromatographic process by adding modules, the scalability is substantially linear. This makes predicting of results with the scaled up process much easier than that of the prior art.

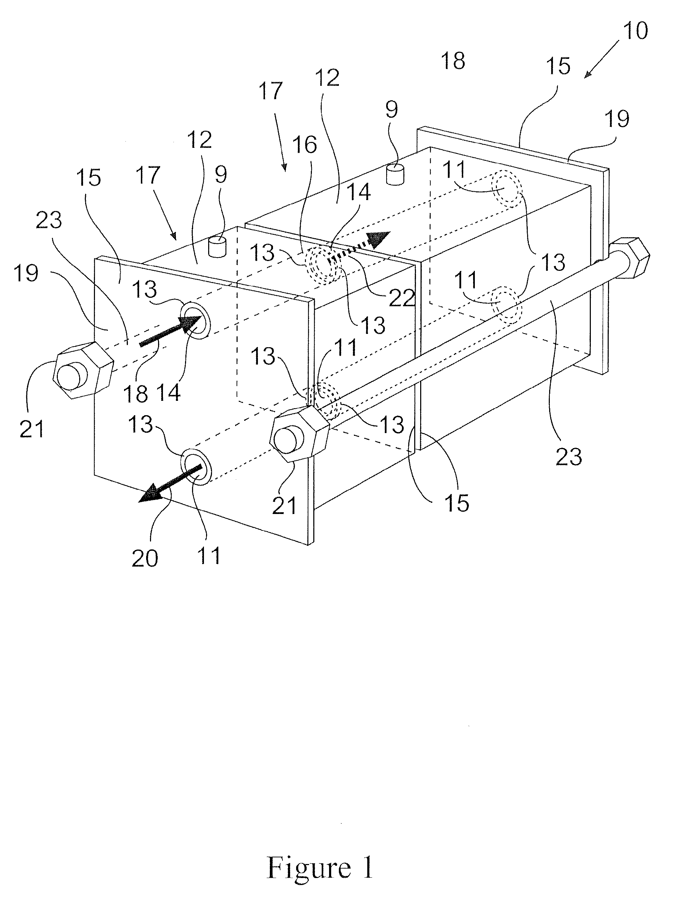

Referring to Figure 1, a chromatographic apparatus 10 of this invention is shown. Each of the modules 17 of the chromatographic apparatus 10 (in this instance, two modules are shown) comprises a housing 12, an optional vent 9, one or more fluid inlets 14 which is connected at surface 16 to one or more second fluid inlets 14 on a substantially identical second module or is capped 11 at the end module if more than one module is used or is capped on each module if the modules are used in a series flow formal. The one or more modules are arranged on a support mechanism comprising the end plates 19, bolts 23 and nuts 21. Connection of the modules 17 is effected by applying pressure such as 6894.76-13789.52 kPa (1000-2000 psi), to end plates 19 with an hydraulic cylinder (not shown) in a manner well known in the art wherein sealing is effected at contacting gaskets 13. One such support mechanism that is useful in this invention is the POD filter holder available from Millipore Corporation of Billerica, Massachusetts. During application of hydraulic pressure, the nuts 21 are tightened on bolts 23. Fluid enters the modules 17 through the inlets 14 as indicated by arrow 18.

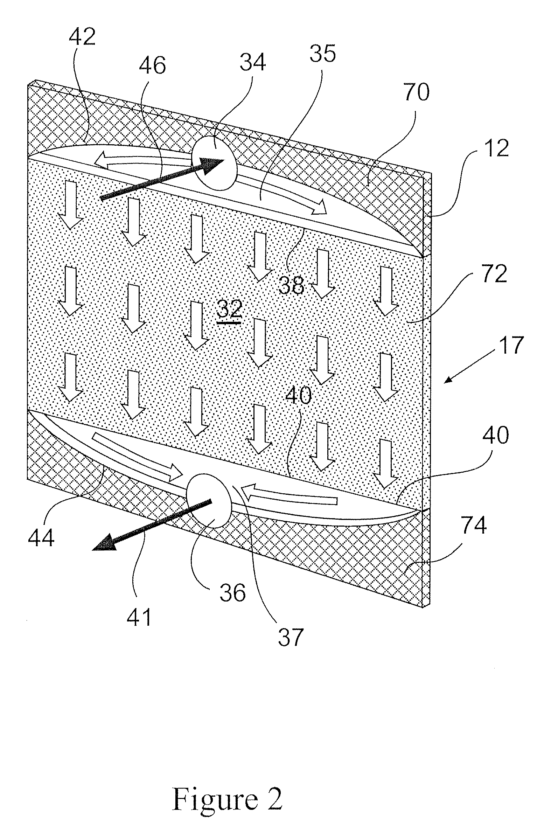

Each module 17 also is provided with a fluid outlet 11. Each fluid inlet 14 and fluid outlet 11 is surrounded by a gasket 13 which extends above a flat outside surface 15 of each module. The housing 12 contains a packed chromatographic bed (not shown, see element 32 of Figure 2) through which feed 18 is passed and from which effluent 20 is removed through fluid outlet 11. A feed portion 22 obtained from feed 18 is directed to a second module. When there is no second module, the feed is ended and its entirety passes through the chromatographic bed. Representative suitable connectors include gaskets or O-rings or the like. A small conduit, such as plastic or metal pipe suitably sealed can alternatively be utilized between modules to effect module connection. It is preferred that outside walls 15 be flat so that the length of conduits connecting adjacent modules 17 can be minimized. An exemplary mode of connection is as follows: inlet 14 and outlet 11 in Figure 1 have a groove around them to reeeive a gasket 13. The gaskets 13 of adjacent devices are mated and the sealing is made by applying hydraulic pressure. It is to be understood that any available means for connecting the modules together can be utilized so long as fluid flow is effected from the inlets, through the chromatographic beds, out the outlets, in parallel flow.

Referring to Figure 2, the flow path of fluid through a cross section of the module of Figure 1 is shown. The module 17 contains a packed bed of chromatographic particles 32, the thickness of which can vary depending upon the module design chosen. The module 17 is provided with a fluid inlet 34 and a fluid outlet 36. The bed 32 is retained within the housing 12 by fluid porous frits 38 and 40. The portion of fluid inlet 34 below the header 42 is fluid porous or preferably open space 35. The portion of fluid outlet 36 above the bottom header 44 also is fluid porous or preferably open space 37. The feed 46 enters inlet 34, into the space 35 below the header 42, passes through upper frit 38, through bed 32, through lower frit 40 and out outlet 36 as effluent 41. The desired product is either recovered in effluent 41 or from bed 32 under suitable elution conditions as is known in the art. The spaces 35 and 37 are designed to provide a distribution and collection area respectively for the fluid in the system before and after the bed 32. As shown in this embodiment, it is a parabolic shape such that the height at the farthest ends is less than that nearest the middle where the inlet 34 or outlet 36 respectively are shown. The inlet and outlet 36 can communicate with the space 35 and 37 in a variety of ways. In one embodiment, the communication may be through slots/nozzles. The size and number of slots/nozzles would be chosen so as to minimize pressure losses. In another embodiment, the entire lower half of inlet 34 and the upper half of outlet 36 could be porous. This enables the device to operate in a manner that minimizes pressure drop across the surface of the bed 32 adjacent the spaces 35 and 37 and ensures that there is even distribution of the fluid across the bed 32 so that all chromatography media is effectively and evenly utilized. Preferably the spaces 35 and 37 are minimized to the extent that they achieve good distribution and pressure drop characteristics. Generally, the smaller the height and overall volume of the space 35 and 37 the better.

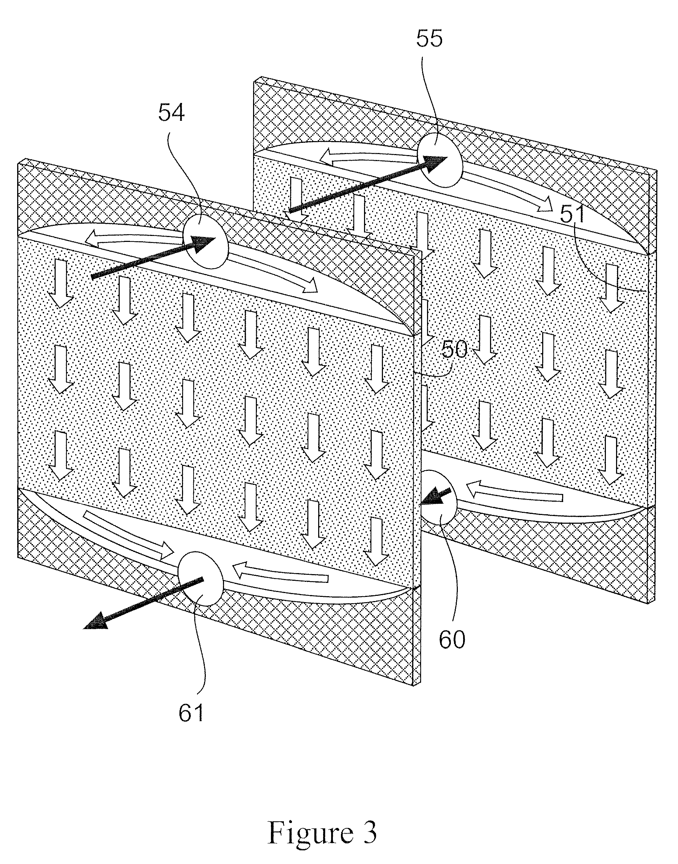

As shown as Figure 3, a plurality of the modules of Figures 1 and 2 are connected together. The modules 50 and 51 are joined together at fluid inlets 54 and 55 and at fluid outlets 60 and 61. Parallel fluid flow is effected through modules 50 and 51. Inlet 55 can be capped or mated with another module. Outlet 60 can be capped or receive fluid from another module. The flow through each module should be substantially the same that is, from the inlets, through the chromatographic bed in the module and out the outlets.

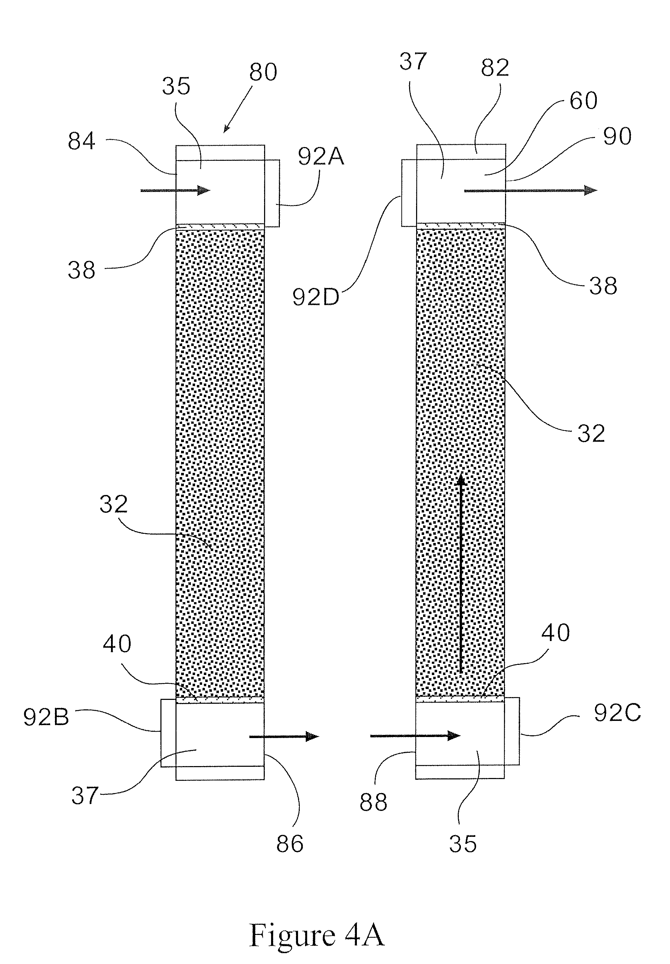

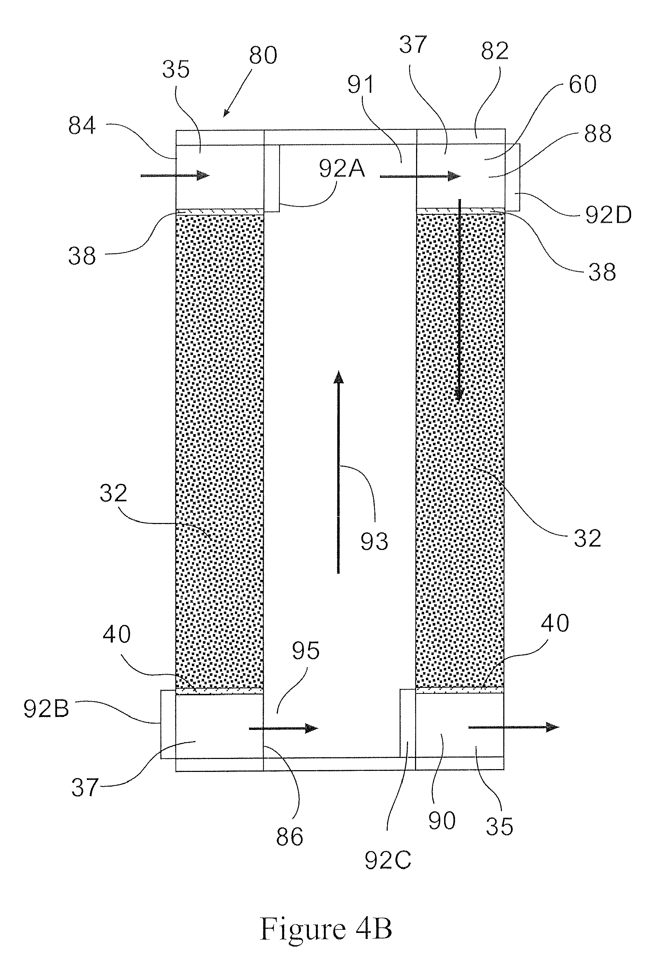

Figure 4A shows two modules set up in a series flow formal The first module 80 has an inlet 84 that feeds to space 35. The fluid passes through upper frit 38 and into the packed bed 32. It then flows out through lower frit 40 and space 37 to the outlet 86. The fluid then flows into inlet 88 of the second module 82, through space 35 and frit 38 40 into the bed 32 and out the frit 40 38 and space 37 to the outlet 90. The second end of inlet 84 is capped by a cap or solid wall 92A. Likewise the first end of outlet 86, the second end of inlet 88 and the first end of outlet 90 are similarly capped by a cap or solid wall 92B, 92C and 92D respectively in order to effect a series flow. Additional modules can be added in the same configuration as shown if desired. The modules in the Figure 4A are shown in exploded view for ease of understanding but they would be mated to each other as described above in regard to Figures 1-3 in actual assembly and use. One can simply invert the orientation of the second module relative to the first module to ensure direct serial flow as shown. Alternatively, as shown in Figure 4B, one can form a blank module or diverter plate 93 having an inlet 95 that connects with outlet 86 and an outlet 97 connected to inlet 88 but with no media or frit or headers and interpose it between the first and second module so that fluid can be brought from the outlet 86 to the first end of inlet 88 such that all the inlets are arranged on one end.

Each chromatographic module can be prepared for use as follows: Each module will have three parts such as is shown in Figure 2, a top 70, a bottom 74 and a middle 72. The top and bottom can be identical and will incorporate a bed support 38, 40 such as a frit, stainless steel mesh or hydrophilic polyethylene mesh or screen. The headers 42 and 44 in the top and bottom can be machined and the three parts can be mated with nuts and bolts or screws or the like with an appropriate sealing mechanism such as an O-ring, gasket and the like. Alternatively, overmolding with a plastic jacket that holds the entire three pieces together can be utilized. Alternatively, the three pieces can be joined by heat bonding or with adhesives. In another embodiment, either the top 70 or the bottom 74 can be molded as one piece with the middle 72 or it 70 or 74 can be overmolded to the middle 72.

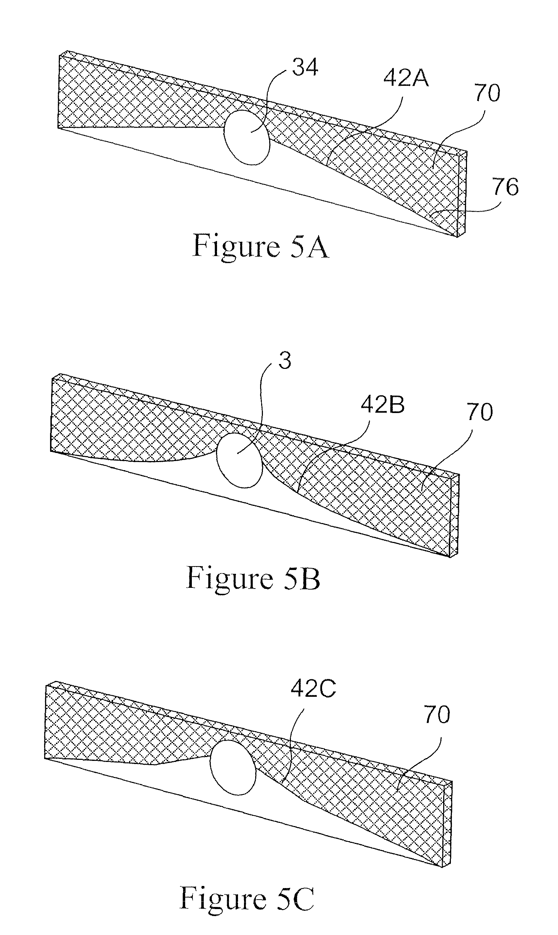

Figures 5A-C show other designs of the headers that may be used in the present invention. Figure 5A shows a header 42A which has a linear taper from the inlet 34 to an area adjacent the outer edge 76. Figure 5B shows a header 42B having a hyperbolic curvature (opposite to that of Figure 2). Figure 5C shows a header 42C having a linear two stage taper from the inlet 34 to an area adjacent the outer edge 76. Figure 5c shows a header with two linear tapers of varying slopes. Others can be easily thought of by one of ordinary skill in the art. Preferably the top configuration and bottom configuration of the headers are identical so that if desired flow may be reversed and enter from the bottom and exit from the top if desired.

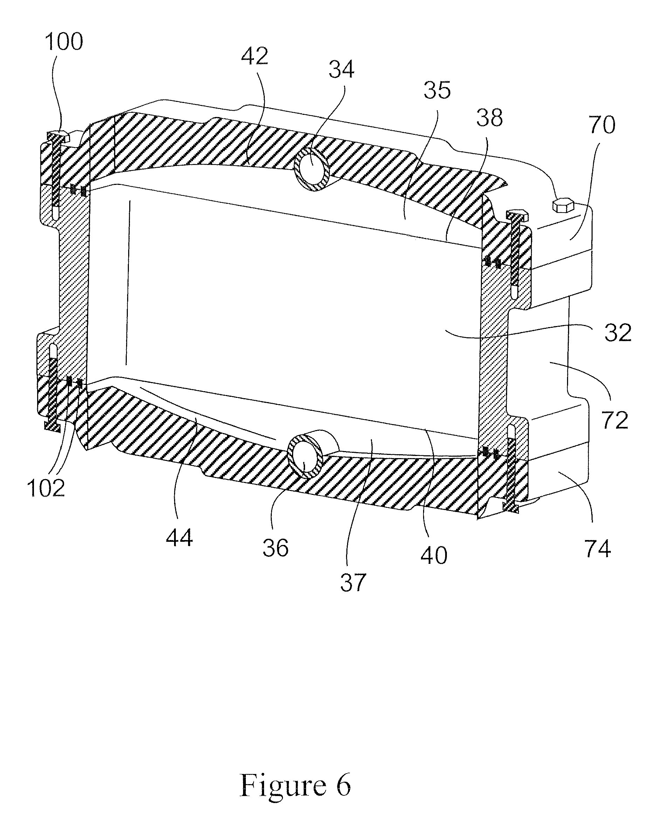

Figure 6 shows an embodiment of the product of Figure 2 including the outer casing of the device. The device in this embodiment is a three piece design having a top 70, middle 72 and bottom 74. In this embodiment, the pieces (70, 72, 74) are held together by a series of screws 100 and sealing gaskets 102 between the top 70 and middle 72 and bottom 74 and middle 72.

To pack the chromatographic media in the device, vibration can be effected to pack the media with a minimum of voids. Suitable examples of chromatographic media include ProSep®A resin (a media available from Millipore Corporation of Billerica, Massachusetts), ion exchange media, agarose based media silica, carbon, controlled pore glass, hydroxyapatite or the like.

Any chromatographic media can be employed including beads, especially porous beads, monoliths or fibrous mats. Examples of materials to be purified include proteins, recombinant or natural, antibodies, enzymes, DNA or RNA fragments, plasmids or other biomolecules, synthetic molecules such as oligonucleotides, other selected molecules and the like.

Examples of suitable polymeric material for the module include but are not limited to, polycarbonates, polyesters, nylons, PTFE resins and other fluoropolymers, acrylic and methacrylic resins and copolymers, polysulfones, polyethersulfones, polyarylsulfones, polystyrenes, polyvinyl chlorides, chlorinated polyvinyl chlorides, ABS and its alloys and blends, polyolefins (e.g. low density polyethylene, high density polyethylene, and ultrahigh molecular weight polyethylene and copolymers thereof), polypropylene and copolymers thereof, and metallocene generated polyolefms as well as thermosets, rubbers and other curable polymeric materials such as polyurethanes, epoxies, fiberglass reinforced epoxies, synthetic rubbers such as silicones and the like.

In use one or more modules according to the invention and containing a selected media are mounted on a support device. At least and preferably, one end plate of the support mechanism has a corresponding inlet and outlet and optionally vent that align with those of the module of the one or more modules that is positioned against the end plate(s) having the inlet, outlet and optional vent. The hydraulic press which is attached to one or both end plates is used to move the end plates toward each other and against the one or more modules and the gaskets they contain on their respective inlets, outlets and optional vents until a liquid tight seal is formed. Conduits, such as stainless steel pipe, or hoses, such as rabber or plastic hoses or tubes, frora the supply of liquids (raw feedstream, equilibration buffers, wash buffers, elution buffers) to the inlet of the end plate are attached. Conduits or hoses to the filtrate side are attached to the outlet. Optionally, it may then be attached to a downstream component such as a storage tank or the next piece of equipment to be used in the flltration process, such as another support mechanism containing a different media in similarly designed modules, a polisher, a viral filter or a tangential flow filtration (TFF) device. The vent may be attached to a vent filter such as an AERVENT® gas filter available from Millipore Corporation of Billerica, Massachusetts.

Liquid is pumped into the conduit/hose through the inlet and into the module(s). Liquid exits the module(s) and exits via the outlet. If the media in the module(s) captures impurities the desired product is in the first filtrate. If the media binds to the desired product, then the impurities are in the first filtrate. In this instance, one or more washes can then be applied to remove any loosely bound impurities and then an elution buffer (such as liquid having a different pH, salt concentration conductivity, etc) as is well known in the art is pumped through the bed to elute the desired product which exits the outlet from the system.

Valves, pumps and other such commonly used devices can also be attached to the System as needed.

### EXAMPLE

Two prototypes of the device as described in this patent application were in a form similar to that of Figures 2 and 6. The prototypes were formed from polypropylene using stainless steel screen frits in a three piece design held to together by screws.

CFD(Computational Fluid Dynamics) simulations were carried out on this design to predict the shapes of the frontal curves that could be expected from the prototype.

The prototypes were each packed with 12 liters of Millipore Corp's ProSep® A protein A chromatography resin. Vibration packing using a OR65 vibrator from OLI, Inc. using an air pressure of 344.74 kPa (50 psi) ( approximately 15000-20000 vibrations/second) was used in a cycle of one minute Vibration, two minutes no vibration for between 20 and 30 cycles to form a stable, consolidated bed of this resin.

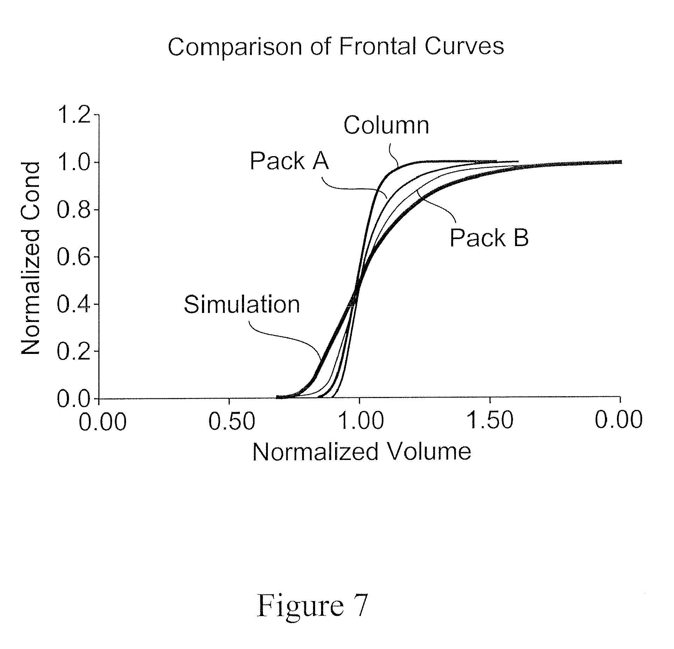

Subsequently, the prototypes were equilibrated with purified water and challenged with a step front of 1M sodium chloride in purified water. The sodium chloride was unretained on the resin and acted as a tracer molecule to evaluate the efficiency of the packed bed. Figure 7 compares the frontal curves obtained with these prototypes with that obtained with a traditional column and predicted by simulations. Two different packs were carried out with the prototype and these are referred to as Pack A and Pack B in the figure. The data labeled "column" was generated on a Millipore QuikScale® QS450 (450 mm dia) column.

As is evident from Figure 7, the frontal curves obtained with the prototype were sharper than predicted by the Simulation. Optimizing the header volume and shape would minimize the hold up volumes and improve the device efficiency even further.

## Claims

1. A chromatographic module (17;50,51;80,82), comprising:
a fluid inlet (14;34;54,55;84,88) to the module;
a fluid outlet (11;36;60,61;86,90) from the module;
a chromatographic packed bed (32) positioned within the module between the fluid inlet (14;34;54,55;84,88) and the fluid outlet (11; 36; 60, 61; 86, 90),
wherein the packed bed (32) is retained within the module by a first fluid porous frit (38) located at the side of the fluid inlet (14;34;54,55;84,88) and a second porous frit (40) located at the side of the fluid outlet (11;36;60,61;86,90), and
a portion of the fluid inlet (14;34;54,55;84,88) and a portion of the fluid outlet (11;36;60,61;86,90) is in fluid communication with the respective frit (38,40) and the packed bed (32).

2. The chromatographic module of claim 1, wherein the module has two opposing flat exterior walls through which the fluid inlet (14;34;54,55;84,88) and the fluid outlet (11;36;60,61;86,90), respectively, extend.

3. The chromatographic module of claim 1 or 2, further comprising a vent (9).

4. The chromatographic module of claim 1, 2 or 3, further comprising a space (35,37) adjacent the fluid inlet (34) and the fluid outlet (36), respectively, and in communication therewith, for providing a distribution and collection area, respectively.

5. The chromatographic module of claim 4, wherein the spaces (35,37) respectively have a shape such that a hight at the outer edges (76) farthest from the fluid inlet (34) or fluid outlet (36), respectively, is less than in the vicinity of the portion where fluid inlet (34) or fluid outlet (36), respectively, are arranged.

6. The chromatographic module of claim 4 or 5, wherein the module includes headers (42,44) at opposite outer ends thereof, wherein the fluid inlet (34) and fluid outlet (36), respectively, open at the headers (42,44) and the spaces (35,37) are adjacent to the headers (42,44).

7. The chromatographic module of any one of claims 1 to 6, wherein the module is substantially symmetrical with respect to center lines so that the module can be used in an inverted orientation.

8. A chromatographic apparatus comprising:
at least one chromatographic module (17;50,51;80,82) as defined in any one of claims 1 to 7.

9. The chromatographic apparatus of claim 8 wherein a plurality of the chromatographic modules (17;50,51;80,82) are provided and joined together at their respective fluid inlet(s) (14;34;54,55;84,88) and fluid outlet(s) (11; 36; 60, 61; 86, 90).

10. The chromatographic apparatus of claim 9 wherein the fluid inlet(s) (14;34;54,55) and fluid outlet(s) (11;36;60,61) of adjacent modules are joined such that a parallel flow through the modules is establised.

11. The chromatographic apparatus of claim 9 wherein the fluid inlet(s) (84,88) and fluid outlet(s) (86,90) of adjacent modules are joined such that a serial flow through the modules is establised.

12. The chromatographic apparatus of claim 10 wherein a diverter plate is interposed between each pair of adjacent modules so that fluid can be brought from the fluid outlet of the first module of the pair to the fluid inlet of the second module of the pair such that all the fluid inlets are arranged on one end.

13. The chromatographic apparatus of claim 9, 10, 11 or 12, further comprising connecting means (13) for providing a fluid connection between the respective fluid inlet(s) (14;34;54,55;84,88) and fluid outlet(s) (11; 36; 60, 61; 86, 90).

14. The chromatographic apparatus of claim 13 wherein the connecting means includes a sealing means provided on the fluid inlet (14;34;54,55;84,88) and/or the fluid outlet (11;36;60,61;86,90) of the modules.

15. The chromatographic apparatus of any one of claims 8 to 14, further comprising
a support mechanism having a first and a second end plate (19) and one or more bolts (23) and nuts (21) connecting the first end plate (19) to the second end plate (19) with the chromatographic module(s) (17;50,51;80,82) arranged therebetween; and
a sealing means on the fluid inlets (14;34;54,55;84,88) and the fluid outlets (11;36;60,61;86,90) of the modules for establishing a liquid tight seal with the end plates (19) and the adjacent module(s);
wherein the first end plate (19) and/or the second end plate (19) has an inlet and/or an outlet which are capable of aligning and liquid tightly sealing with the fluid inlet and/or fluid outlet of the respective adjacent module.
